Europäisches Patentamt

European Patent Office

Office européen des brevets

(11) Veröffentlichungsnummer: **0 152 546**
A1

# (12) EUROPÄISCHE PATENTANMELDUNG

(21) Anmeldenummer: 84113582.5

(22) Anmeldetag: 10.11.84

(51) Int. Cl.⁴: **C 08 J 3/22,** C 08 J 3/20, G 11 B 3/70

(30) Priorität: 31.12.83 DE 3347704

(43) Veröffentlichungstag der Anmeldung: 28.08.85 Patentblatt 85/35

(84) Benannte Vertragsstaaten: **AT CH FR GB LI NL**

(71) Anmelder: **Zipperling Kessler & Co (GmbH & Co), Kornkamp 50, D-2070 Ahrensburg (DE)**

(72) Erfinder: **Wessling, Bernhard, Dr., Bachstrasse 112, D-2072 Bargteheide (DE)**

(74) Vertreter: **UEXKÜLL & STOLBERG Patentanwälte, Beselerstrasse 4, D-2000 Hamburg 52 (DE)**

(54) Antistatika enthaltendes Konzentrat auf Basis von Polymeren, Verfahren zu dessen Herstellung sowie dessen Verwendung.

(57) Es wird ein Antistatika enthaltendes Konzentrat auf Basis von Polymeren und ein Verfahren zu dessen Herstellung angegeben, bei welchem man das Antistatikum auf die Teilchenoberfläche eines feinteiligen Polymerpulvers aufbringt. Das so erhaltene Konzentrat eignet sich zur Herstellung von Kunststoff-Formmassen für Kunststoff-Fertigerzeugnisse wie Schallplatten mit verbesserten Eigenschaften.

EP 0 152 546 A1

ACTORUM AG

Antistatika enthaltendes Konzentrat auf Basis von

Polymeren, Verfahren zur dessen Herstellung

sowie dessen Verwendung

Die meisten handelsüblichen Polymeren sind elektrische Isolatoren. Bei den aus solchen Polymeren hergestellten Erzeugnissen wie Synthesefasern oder Schallplatten führt dies bei mechanischer Reibung häufig zu starken elektrischen Aufladungen, wodurch Staub- und Schmutzteilchen angezogen und festgehalten werden.

Es ist bekannt, Synthesefasern nachträglich mit antistatisch wirkenden Substanzen auszurüsten, um die vorstehend geschilderten Erscheinungen zu bekämpfen. Als antistatische Substanzen haben sich vor allem oberflächenaktive Stoffe wie anionische, kationische und nicht ionische Tenside bewährt.

Es ist vielfach vorgeschlagen worden, Kunststoff-Formmassen mit antistatischen Substanzen zu versetzen, um auf diese Weise Kunststofferzeugnisse mit dauernd antistatischen Eigenschaften zu erhalten (vergl. z.B. DE-B-12 15 925, DE-A-15 44 670, DE-B-23 41 950, US-A-29 78 440 und EP-B-10975). Da die Verträglichkeit von Antistatika mit den üblicherweise verwendeten Kunststoffen, z.B. Polyvinylchlorid (PVC), gering ist, wandert das zugesetzte Antistatikum unter Bildung eines dünnen Oberflächenfilms teilweise an die Oberfläche. Aus solchen Kunststoffpressmassen hergestellte Kunststofferzeugnisse zeigen dann eine reduzierte Neigung zur elektrostatischen Aufladung, weil sich an diesem Oberflächenfilm Wasser aus der Luft anlagert, das zusammen mit dem Antistatikum Aufladungen ableiten kann. Die Güte einer antistatischen Ausrüstung ist bei Schallplatten aus PVC-Vinylacetat(VA)-Copolymeren besonders kritisch.

Es ist auch schon versucht worden, auf diese Weise antistatisch ausgerüstete Schallplatten herzustellen, vergl. SU-A-870 416 (C.A. 96, 105239v), SU-A-891 715 (C.A. 96, 182280d) und EP-B-10975), doch sind alle entsprechenden Versuche in der Praxis bislang gescheitert.

Dies beruht vermutlich in erster Linie darauf, daß der Oberflächenfilm aus antistatischen Substanzen unregelmäßig dick und eher tröpfchenförmig ausgebildet ist und deshalb zu Belägen auf den Preßmatrizen führt mit der Folge, daß die so hergestleten Schallplatten ein bei der heutigen Qualität der Wiedergabegeräte nicht tolerierbares verstärktes Rauschen zeigen. Es kommt hinzu, daß die unregelmäßige Dicke des Obeflächenfilms keine gleichmäßige Ladungsableitung erlaubt und daß beim Verpressen derartiger Massen eine Verarmung der Oberfläche an Antistatikum eintritt, was zur Folge hat, daß Oberflächenwiderstandswerte von $10^{11}$ bis $10^{13}$ $\Omega$ gemessen werden. Dies bedeutet, daß die Entladungshalbwertzeit für elektrostatische Aufladungen im Bereich von Minuten liegt, so daß von einer wirksamen antistatischen Ausrüstung keine Rede mehr sein kann.

Durch spezielle Compoundierverfahren, mit denen eine besonders homogene Verteilung der erforderlichen hohen Antistatikummenge erreicht werden kann, lassen sich Granulate gewinnen, aus denen Schallplatten mit Oberflächenwiderständen im Bereich von $10^8$ bis $10^9$ $\Omega$ und Entladungshalbwertzeiten unter 1 Sek. gepreßt werden können. Der Nachteil dieser Technik ist, daß auf jeden Fall die gesamte Preßmasse diesen aufwendigen Compoundierschritt durchlaufen muß, wobei hinzukommt, daß die Fertigteilhersteller über solche Techniken in der Regel nicht verfügen.

Der vorliegenden Erfindung liegt daher die Aufgabe zugrunde, einen Weg zur Herstellung von Kunststofferzeugnissen, insbesondere Schallplatten, mit Oberflächenwiderstandswerten in der Größenordnung von $10^8$ bis $10^9$ $\Omega$ entsprechend einer Entladungshalbwertzeit in der Größenordnung von wenigen Sekunden, vorzuweise weniger als 1 Sek., aufzuzeigen, bei welchem einem Basispolymer ohne antistatische Eigenschaften ein Antistatika enthaltendes Konzentrat bzw. ein Masterbatch zugesetzt werden kann, so daß die Fertigteilherstellung ohne die erwähnten Compoundierungsprobleme erfolgen kann. Die bislang bekannten Antistatika enthaltenden Polymerkonzentrate (DE-A-24 54 816, FR-A-13 54 816) erfüllen die gestellten Forderungen nicht.

Gegenstand der Erfindung ist demgemäß ein Antistatika enthaltendes Konzentrat auf Basis von Polymeren, insbesondere Polyvinylchloridhomo- oder -copolymeren oder Acrylnitril/Butadien/Styrol-Copolymeren, welches dosier- bzw. rieselfähig ist und nicht zum Stocken neigt und welches dadurch gekennzeichnet ist, daß die Teilchenoberfläche eines Pulvers des Polymeren mit dem Antistatikum benetzt ist. Das erfindungsgemäße Verfahren zur Herstellung des Konzentrates ist dadurch gekennzeichnet, daß man das Antistatikum auf die Teilchenoberfläche des feinteiligen Polymerpulvers aufbringt und die Teilchen so mit dem Antistatikum gleichmäßig umhüllt. Beim Einarbeiten eines derart hergestellten pulverförmigen Konzentrates in den restlichen für die Kunststoffpreßmasse erforderlichen Kunststoff wird eine Preßmasse erhalten, welche die Nachteile der bislang bekannten Massen nicht mehr aufweist. Das Einarbeiten kann in einem üblichen Vormischprozeß, z.B. in Heiz/Kühlmischern ohne zusätzlichen Aufwand erfolgen, da die Rohware ohnehin üblicherweise schon mit Stabilisatoren und Gleitmitteln zu einer verarbeitungsfertigen oder granulierbaren rieselfähigen Trockenmischung, dem sogenannten "dry blend" aufbereitet wird. Aus dieser Pulvermischung, die nicht granuliert zu werden braucht, lassen sich große Serien von Preßlingen, z.B. Schallplatten, herstellen, welche völlig einwandfreie Qualität aufweisen. Insbesondere beobachtet man bei so hergestellten Schallplatten kein erhöhtes, sondern ein vermindertes Grundgeräusch und die Oberflächenwiderstandswerte liegen in dem angestrebten Bereich, so daß eine praktisch sofortige Entladung stattfindet. Demgemäß ziehen derart hergestellte Kunststoffprodukte selbst bei längerem Liegen kaum noch Staub- und Schmutzteilchen an, was bei Schallplatten auch auf Dauer eine bessere akustische Wiedergabequalität sicherstellt.

Das erfindungsgemäße Verfahren wird vorzugsweise so durchgeführt, daß man das Antistatikum in Form einer Dispersion oder Lösung mit dem Polymerpulver vermischt und anschließend das Dispersions- oder Lösungsmittel entfernt. Ein besonders geeignetes Dispersions- bzw. Lösungsmittel ist Wasser, geeignet sind aber beispielsweise auch aliphatische $C_2$- bis $C_4$-Alkohole. Nach Herstellen einer Dispersion bzw. Paste aus dem Polymerpulver und der Lösung bzw. Dispersion des Antistatikums muß das Lösungsmittel praktisch vollständig entfernt werden, was in an sich bekannter Weise durch Abdestillieren erreicht werden kann. Bei Verwendung von Wasser sollte das fertige Konzentrat weniger als 0,1 Gew.% Wasser enthalten, um riesel- und dosierfähig sowie blasenfrei verarbeitbar zu sein. Bei Verwendung niedrig schmelzender Antistatika ist es andererseits auch möglich, das Polymerpulver mit einer Schmelze des Antistatikums zu behandeln und auf diese Weise ein pulverförmiges Konzentrat zu erhalten, in dem die einzelnen Teilchen durch das Antistatikum weitgehend homogen und glatt umhüllt sind.

Kennzeichnend für die so erhaltenen Konzentrate ist eine glaskugelartige Struktur mit eingeschlossenem Polymerpulverkern.

Im Rahmen der Erfindung können als Antistatika die verschiedensten für diesen Zweck bereits bekannten chemischen Stoffe verwendet werden. Bevorzugt sind oberflächen- bzw. grenzflächenaktive Substanzen (Tenside), vergl. die Zusammenstellung von S. Riethmayer, GAK S. 510 (1973), die zum Bestandteil dieser Beschreibung gemacht wird. Besonders bevorzugt sind Alkylsulfonate mit 10 bis 20, vorzugsweise 16 bis 20 C-Atomen im Alkylrest, welche vor allem in der Form ihrer Alkalisalze Verwendung finden. Dem Polymerpulver wird das Antistatikum in einer Menge von etwa 2 bis 20, vorzugsweise 3 bis 15 Gew.%, jeweils bezogen auf das Polymerpulver, zugesetzt. Besonders günstig ist ein Antistatikumgehalt des Konzentrats von etwa 5 bis 10 Gew.%, bezogen auf das Polymerpulver. Zur Herstellung der Kunststoffpressmasse wird das Konzentrat in einer solchen Menge in weiteren Kunststoff eingearbeitet, daß die Preßmasse etwa 0,3 bis 1,0, vorzugsweise 0,5 bis 0,8 Gew.% Antistatikum, jeweils bezogen auf die Preßmasse, enthält.

Das Kunststoffpulver für das Konzentrat besteht vorzugsweise aus Homo- oder Copolymeren des Vinylchlorids, doch sind auch Pulver aus Acrylnitril/Butadien/Styrol-Copolymeren, Polyethylen, Polypropylen, Polystyrol, Polyoxymethylen und anderen Polymeren geeignet. Es ist günstig, zur Herstellung des Konzentrats als Polymerpulver den höhermolekularen Anteil der antistatisch auszurüstenden Polymermischung zu verwenden, falls das zu fertigende Endprodukt nicht nur aus einer Polymerkomponente besteht. Beispielsweise kann ein Pulver aus einem höhermolekularen Polyvinylchlorid für das Konzentrat eingesetzt und dieses Pulver kann mit einem (teil)verträglichen Pulver niederen bis mittleren Molekulargewichts zu der Kunststoffpreßmasse verarbeitet werden.

Es hat sich als vorteilhaft erwiesen, bei der Herstellung des Antistatika enthaltenden Konzentrats auch alle anderen Zusätze wie Stabilisatoren, Gleitmittel, Färbemittel (Pigmente, Farbstoffe), Füllstoffe und andere Verarbeitungshilfsmittel, die für die zu Fertigteilen zu verarbeitende Polymermischung erforderlich sind, zuzusetzen                                                                    und in die Antistatikumhülle einzuarbeiten.

Das eingesetzte Kunststoffpulver sollte porös sein und eine Teilchengröße von weniger als 500 µm, insbesondere von 50 bis 400 µm aufweisen.

Es ist noch nicht möglich, eindeutig anzugeben, worauf der überraschende Erfolg des erfindungsgemäßen Verfahrens im wesentlichen beruht. Aufgrund der bislang vorliegenden Befunde kann vermutet werden, daß die Umhüllung der einzelnen Polymerpulverteilchen mit dem Antistatikum durch feste Bindungen in Form einer Chemi- und/oder Physisorption zu einer äußerst gleichmäßigen Verteilung des Antistatikums führt und daß dadurch eine entscheidende Verbesserung der Verteilbarkeit des Antistatikums und der Additive während des Mischprozesses erzielt wird, ohne daß eine übermäßige oder ungleichmäßige Exudation stattfindet.

Die erfindungsgemäßen Antistatika enthaltenden Polymerkonzentrate dienen zur Herstellung von antistatisch ausgerüsteten Kunststoff-Formmassen. Aus diesen lassen sich die verschiedensten Kunststofffertigerzeugnisse herstellen, z.B. Blas- oder Kalanderfolien, Hohlkörper wie Flaschen, Rohre, Platten (auch zur Weiterverarbeitung in Warmformverfahren) und verschiedene Spritzgußartikel. Besonders bewährt haben sich die erfindungsgemäßen Konzentrate zur Herstellung von Kunststoff-Preßmassen für Schallplatten.

Zur näheren Erläuterung der Erfindung sollen die nachfolgenden Beispiele dienen.

Beispiel 1

In einem Schnellmischer einer Heiz-Kühl-Mischerkombination werden im Schnellgang 100 Teile Suspensions-PVC mit einem K-Wert von 70, einem MFI (200/21.6) von 1,0, einer Schüttdichte von 460 g/cm$^3$, einem Chlorgehalt von 56% und einem Kornverteilungsmaximum um 100 μm mit 5 Teilen eines Zinn-Stabilisators, 3 Teilen eines Paraffinwachses und 3,5 Teilen Calciumstearat auf 140°C Mischtemperatur gebracht. Der Mischer wird dann auf den Langsamgang geschaltet und durch eine Öffnung werden 12 Teile einer auf 180-200°C vorgewärmten Alkylsulfonat-Schmelze mit Hilfe einer Dosierschnecke innerhalb von 3 Minuten in den Mischraum eingebracht.

Die Mischung wird gekühlt und anschließend werden in einem anderen Schnellmischer 7 Teile des Konzentrats zu 100 Teilen eines PVC-VA-Copolymers mit einem K-Wert von 60, einem MFI (185/10) von 9,0 und einem VA-Gehalt von 9% bei 85°C zugemischt.

Beispiel 2
Die erhaltene Trockenmischung kann granuliert werden oder vorteilhafter direkt auf einer handelsüblichen Extruder-Pressen-Kombination zu Schallplatten verpreßt werden. Die erhaltenen Schallplatten weisen bei 60% relativer Luftfeuchte einen Oberflächenwiderstand von ca. $5 \times 10^8 \Omega$ , eine Enladungshalbwertszeit von kleiner als 1 sec und ein Grundgeräusch von -67 dB auf (nicht antistatische Schallplatte: -64 dB); die Matrizen sind belagsfrei.

Beispiel 3
In analoger Weise kann ein ABS-Pulver (MFI 200/5: 1,2) ohne Verarbeitungshilfsmittel bei einer Mischtemperatur von 125°C mit dem Antistatikum und Färbemitteln (3-10 Teile) versetzt werden. 10 Teile dieses Konzentrates werden bei der Compoundierung von ABS, die zur gleichzeitigen Einfärbung dient, zu 100 Teilen zugesetzt.

Beispiel 4

Zu dem PVC-Pulver aus Beispiel 1 wird eine Lösung von 12 Teilen des Alkansulfonats in 40 Teilen $H_2O$ bei 80°C im Schnellgang rasch zugegeben und die erhaltene Masse wird nach 60 sec auf ein Förderband gegeben, dort dünn ausgestrichen und durch einen auf 120°C erwärmten Trockenofen geführt.

Die Trocknung erfolgt durch im Gegenstrom geführte trockene Luft und gegebenenfalls Zusatzheizungen im Trockenkanal.

Für einen Durchsatz von 200 kg/h ist ein Band von 500 mm Breite, eine Trocknungsstrecke von 10 m und eine Bandgeschwindigkeit von 0,85 m/h bei einer Schichtdicke von 10 mm ausreichend.

Beispiel 5

Alternativ kann die aus dem Schnellmischer ausgeworfene Mischung in einen senkrecht angeordneten Nachmischer gegeben werden, dessen üblicherweise mit Kühlwasser gespeisten Doppelwände mit Heißdampf von 120°C erhitzt werden und in den mittels eines Rohrs in die umgewälzte Masse trockene heiße (90°C) Luft (Taupunkt: -30°C) eingeführt wird. Die mit Wasser angereicherte Luft tritt aus einer zusätzlich angebrachten Öffnung am Mischerdeckel aus und wird über eine handelsübliche Trocknungseinrichtung im Kreis geführt.

Nach den Beispielen 4 und 5 wird ein trockenes Pulver erhalten, das nach Beispiel 2 weiterverarbeitet werden kann.

ugs/Lsch

<u>Patentansprüche</u>

1. Antistatika enthaltendes Konzentrat auf Basis von Polymeren, insbesondere Vinylchloridhomo- oder -copolymeren oder Acrylnitril/Butadien/Styrol-Copolymeren, welches dosier- bzw. rieselfähig ist und nicht zum Stocken neigt, dadurch gekennzeichnet, daß die Teilchenoberfläche eines Pulvers des Polymeren mit dem Antistatikum benetzt ist.

2. Verfahren zur Herstellung eines Antistatika enthaltenden Konzentrates gemäß Anspruch 1, dadurch gekennzeichnet, daß man das Antistatikum auf die Teilchenoberfläche eines feinteiligen Pulvers des Polymeren aufbringt und die Teilchen so mit dem Antistatikum gleichmäßig benetzt.

3. Verfahren nach Anspruch 2, dadurch gekennzeichnet, daß man das Antistatikum in geschmolzener Form mit dem festen Polymerpulver vermischt.

4. Verfahren nach Anspruch 3, dadurch gekennzeichnet, daß man das Antistatikum in Form einer Dispersion oder Lösung mit dem Polymerpulver vermischt und anschließend das Dispergier- bzw. Lösungsmittel entfernt.

5. Verfahren nach Anspruch 4, dadurch gekennzeichnet, daß man als Dispergier- oder Lösungsmittel Wasser und/oder aliphatische $C_2$-$C_4$-Alkohole einsetzt.

6. Verfahren nach einem der Ansprüche 2 bis 5, dadurch gekennzeichnet, daß man zusammen mit dem Antistatikum weitere Zusätze auf das Polymerpulver aufbringt.

7. Verfahren nach einem der Ansprüche 2 bis 6, dadurch gekennzeichnet, daß man das Antistatikum dem Polymerpulver in einer Menge von etwa 2 bis 20; vorzugsweise etwa 5 bis 10 Gew.%, bezogen auf das Polymerpulver zusetzt.

8. Verfahren nach einem der Ansprüche 2 bis 7, dadurch gekennzeichnet, daß man zur Herstellung des Konzentrates als Polymerpulver den höhermolekularen Anteil der mit dem Polymerpulver antistatisch auszurüstenden Kunststoffmasse verwendet.

9. Verfahren nach einem der Ansprüche 2 bis 8, dadurch gekennzeichnet, daß man ein Polymerpulver mit einer Teilchengröße von 50 bis 400 µm verwendet.

10. Verwendung des mittels des Verfahrens der Ansprüche 2 bis 9 hergestellten Konzentrates zur Herstellung von antistatisch ausgerüsteten Kunststoff-Formmassen für Kunststoff-Fertigerzeugnisse, insbesondere Schallplatten.

Europäisches
Patentamt

**EUROPÄISCHER RECHERCHENBERICHT**

0152546
Nummer der Anmeldung

EP 84 11 3582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 849 039 (TOKYO SHIBAURA ELECTRIC CO.) * Anspruch 6; Seite 2, Zeilen 79-122; Beispiel 3 * | 1,2,4-7,9,10 | C 08 J 3/22 C 08 J 3/20 G 11 B 3/70 |
| A | US-A-3 723 153 (Y. NAGATA u.a.) * Anspruch; Spalte 2, Zeilen 25-46 * | 1,2,4-7 | |
| A | US-A-3 404 124 (J.N. SCOTT Jr. u.a.) * Anspruch 1; Spalte 3, Zeilen 20-31 * | 1,3 | |
| A,D | DE-B-1 215 925 (SIEMENS-SCHUCKERTWERKE) | | |
| A | DE-A-2 826 360 (HOECHST) | | |

RECHERCHIERTE
SACHGEBIETE (Int. Cl.4)

C 08 J
C 08 K

Der vorliegende Recherchenbericht wurde für alle Patentansprüche erstellt.

| Recherchenort | Abschlußdatum der Recherche | Prüfer |
|---|---|---|
| DEN HAAG | 09-04-1985 | HALLEMEESCH A.D. |